Europäisches Patentamt

European Patent Office

Office européen des brevets

(11) Veröffentlichungsnummer: **0 075 096**
**B1**

(12) # EUROPÄISCHE PATENTSCHRIFT

(45) Veröffentlichungstag der Patentschrift:
04.06.86

(51) Int. Cl.⁴: **A 61 C 1/08**

(21) Anmeldenummer: **82107202.2**

(22) Anmeldetag: **09.08.82**

(54) **Zahnärztliches Handinstrument mit Beleuchtungsvorrichtung.**

(30) Priorität: **20.08.81 DE 3132995**

(43) Veröffentlichungstag der Anmeldung:
**30.03.83 Patentblatt 83/13**

(45) Bekanntmachung des Hinweises auf die Patenterteilung:
**04.06.86 Patentblatt 86/23**

(84) Benannte Vertragsstaaten:
**AT CH DE FR GB IT LI SE**

(56) Entgegenhaltungen:
**EP - A - 0 012 873**
**DE - A - 2 129 542**
**US - A - 4 020 556**

(73) Patentinhaber: **Siemens Aktiengesellschaft, Berlin und München Wittelsbacherplatz 2, D-8000 München 2 (DE)**

(72) Erfinder: **Landgraf, Hermann, Donaustrasse 1, D-6148 Heppenheim (DE)**
Erfinder: **Schuss, Werner, In der Lahrbach 18, D-6148 Heppenheim (DE)**
Erfinder: **Worschischek, Rainer, Magnolienstrasse 57, D-6143 Lorsch (DE)**

**Beschreibung**

Die Erfindung bezieht sich auf eine zahnärztliche Handstückanordnung mit zwei um ihre Längsachsen gegeneinander verdrehbaren und vorzugsweise voneinander axial trennbaren Handstückteilen, welche die Drehbarkeit der Teile gewährleistende Führungsglieder, z.B. einen Führungszapfen im einen und eine dazu passende Führungshülse im anderen Handstückteil, enthalten, mit einer Rasteinrichtung zur axialen Fixierung der beiden Handstückteile im gekuppelten Zustand, sowie mit einer zum Kopfteil der Handstückanordnung führenden Lichtleiteinrichtung.

Bei zahnärztlichen Handstückanordnungen dieser Gattung ist es bekannt (DE-U-6 940 204), Licht über einen aussen am Handstück angeclipsten Lichtleiter an das Kopfteil heranzuführen. Der Lichtleiter ist hierzu in einem Hohlkanal eines Mehrkanalschlauches geführt, der, um die Drehbarkeit der beiden Handstückteile zu gewährleisten, zwischen seinen beiden Anschlussstellen (einerseits am Kopfteil und andererseits am Versorgungsschlauch) mit einer gewissen Überlänge frei, d.h. ohne Abstützung, entlang der beiden Handstückteile angeordnet ist. Eine solche lose Anordnung des Lichtleiters bzw. des Mehrkanalschlauches stört und beeinträchtigt die Handhabung der Handstückanordnung sehr und gewährleistet keine endlose Drehung der Handstückteile.

Bei Handstückanordnungen mit nicht gegeneinander verdrehbaren Handstückteilen, z.B. bei Turbinenhandstücken, welche mittels Anschlusshülse fest, d.h. unverdrehbar mit ihren Versorgungsschläuchen verbunden sind, ist es bekannt, den von einer extern der Handstückanordnung befindlichen Lichtquelle aus gespeisten Lichtleiter in Form eines Glasfaserbündels innerhalb des Handstückes anzuordnen und das Glasfaserbündel mittels einer Y-förmigen Abzweigung in zwei schmälere Glasfaserbündelabschnitte aufzuteilen, deren Enden, auf die Präparationsstelle ausgerichtet, im Bereich des Kopfgehäuses aus diesem austreten (US-A-4 020 556).

Der im Anspruch 1 angegebenen Erfindung liegt die Aufgabe zugrunde, eine Handstückanordnung der eingangs genannten Gattung anzugeben, mit der es unter Vermeidung störender Kabel möglich ist, Licht zur Ausleuchtung z.B. der Präparationsstelle im Patientenmund vom einen zum anderen Handstückteil zu führen, und zwar unter möglichst geringen Lichtverlusten und Beibehaltung einer ausreichenden Drehbarkeit.

Vorteilhafte Weiterbildungen und Ausgestaltungen der Erfindung sind in den abhängigen Ansprüchen enthalten. Nachstehend werden einige Ausführungsbeispiele der Erfindung anhand der Zeichnung näher erläutert. Es zeigen:

Fig. 1 und 2 jeweils ein Antriebsteil und Griffteil einer zahnärztlichen Handstückanordnung mit einer Lichtführung nach der Erfindung in einer Prinzipdarstellung,

Fig. 3 das in Fig. 1 dargestellte Antriebsteil im Längsschnitt,

Fig. 4 das in Fig. 1 dargestellte Griffteil teilweise im Längsschnitt,

Fig. 5 und 6 eine andere Ausführungsform einer Lichtführung durch das Antriebsteil im Längs- und Querschnitt,

Fig. 7 eine andere Ausführungsform einer Lichtführung durch das Griffteil,

Fig. 8 eine weitere Ausführungsform einer Lichtführung durch das Griffteil,

Fig. 9 eine weitere Ausführungsform einer Lichtführung durch das Antriebsteil,

Fig. 10 den in Fig. 9 gezeigten Lichtleitkörper,

Fig. 11 bis 22 verschiedene Ausführungsformen eines Lichtübertragungsringes und Einzelheiten davon.

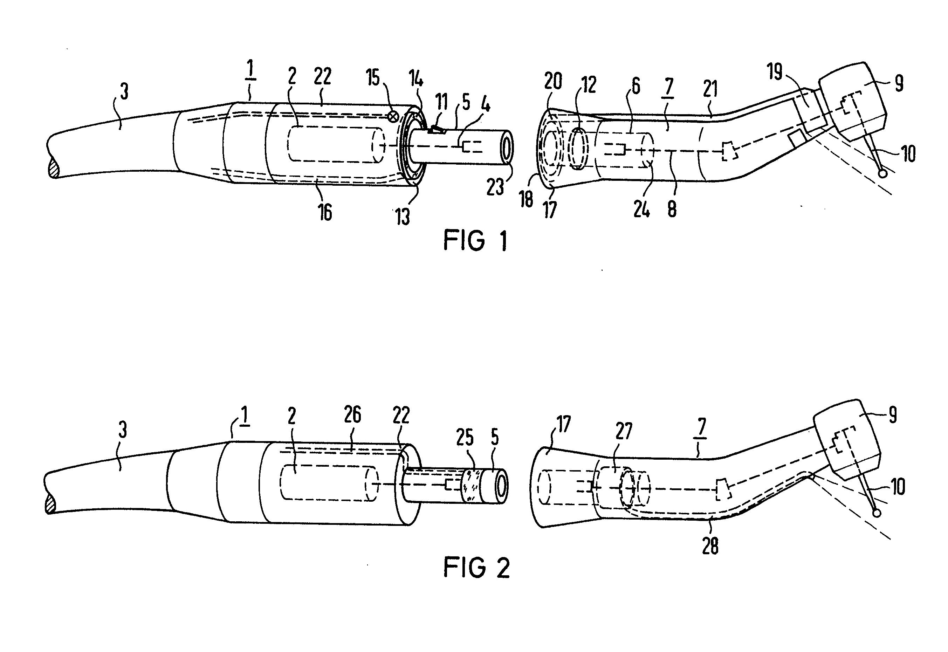

Die Fig. 1 und 2 zeigen in einer schaubildlichen, stark vereinfachten Darstellung verschiedene Ausführungsformen einer Lichtführung bzw. -übertragung vom Antriebsteil auf das Griffteil einer zahnärztlichen Handstückanordnung.

Die Fig. 1 zeigt ein zahnärztliches Antriebsteil 1 mit einem schematisch eingezeichneten Elektromotor 2, dem in bekannter Weise über einen Versorgungsschlauch 3 elektrische Energie zugeführt wird. Die (schematisch dargestellte) Antriebswelle 4 des Motors 2 ist von einem Führungszapfen 5 umgeben, der in eine dazu passende Führungshülse 6 eines Griffteils 7 passt, wenn die beiden Teile axial aneinander gekuppelt sind. Im gekuppelten Zustand ist die Antriebswelle 4 mit Triebwellenabschnitten 8 gekuppelt, die ein im Kopfgehäuse 9 des Griffteils 7 drehbar gelagertes Werkzeug 10 antreiben.

Mit 11 ist eine an sich bekannte Rastnase bezeichnet, die radial federnd im Führungszapfen 5 gelagert ist und beim Ankuppeln des Griffteiles 7 mit einer entsprechenden Ringnut 12 in Eingriff kommt. Dadurch ist einerseits ein ungewolltes axiales Abgleiten des Griffteils 7 vom Antriebsteil 1 verhindert, andererseits die Drehbarkeit der beiden Teile um ihre Längsachsen gewährleistet. Die Rasteinrichtung ist zweckmässigerweise so gestaltet, dass das Griffteil betriebsmässig, d.h. ohne Zuhilfenahme eines Werkzeuges, leicht vom Antriebsteil 1 getrennt werden kann.

Mit der stirnseitigen Fläche 13 des Antriebsteils 1 abschliessend ist ein Lichtübertragungsring 14 vorgesehen, der entweder von einer Lampe 15 oder einem Lichtleiter 16 gespeist wird. In einem zur Anpassung der unterschiedlichen Aussendurchmesser von Antriebsteil 1 und Griffteil 7 konisch verlaufenden Übergangsstück 17 ist ebenfalls mit einer Stirnfläche 18 des Griffteils 7 abschliessend ein weiterer Lichtübertragungsring 20 angeordnet, der im gekuppelten Zustand der beiden Handstückteile 1 und 7 dem Lichtübertragungsring 14 korrespondierend gegenübersteht. Der Lichtübertragungsring 20 ist mit einem weiteren Lichtleiter 21 verbunden, dessen die Lichtaustrittsstelle enthaltendes und auf das Werkzeug 10 gerichtetes Ende am Griffteil 7 mittels einer Klammer 19 befestigt ist.

Bei der beschriebenen Ausführung erfolgt eine Lichtübertragung durch zwei koaxial zum Führungszapfen 5 angeordnete Lichtübertragungsringe, die an stirnseitigen Flächen einerseits des Motorgehäuses 22 des Antriebsteils und andererseits des Griffteils 7 angeordnet sind und im gekuppelten Zustand korrespondierend einander gegenüberstehen. Anstelle der Anordnung des Lichtübertragungsringes an einer stirnseitigen Fläche des Motorgehäuses 22 ist auch eine Anordnung des Lichtübertragungsringes an der stirnseitigen, mit der Position 23 bezeichneten Fläche des Führungszapfens 5 denkbar; dementsprechend wäre der dazu passende Lichtübertragungsring im Griffteil 7 an der mit 24 bezeichneten Stelle, also am Ende der Führungshülse 6 vorzusehen.

Die Fig. 2 zeigt eine Ausführungsform, bei der am Umfang des Führungszapfens 5 ein Lichtübertragungsring 25 vorgesehen ist, der eine radiale Lichtabstrahlungsfläche aufweist. Der Lichtübertragungsring 25 wird von einem Lichtleiter 26 gespeist, der wiederum entweder von einer intern oder extern des Antriebsteils angeordneten Lampe gespeist wird. Korrespondierend zum Lichtübertragungsring 25 ist im Griffteil 7 ein im gekuppelten Zustand von Antriebsteil 1 und Griffteil 7 konzentrisch zum Lichtübertragungsring 25 verlaufender Lichtübertragungsring 27 angeordnet, an dem ein zum Kopfgehäuse 9 führender Lichtleiter Lichtleiter 28 optisch, d. h. im Sinne einer Lichtübertragung, angekoppelt ist.

Anstelle der radialen Übergabe des Lichts mittels des Lichtübertragungsringes 25 im Bereich des Führungszapfens 5 ist auch eine Übergabe im Bereich des Motorgehäuses 22 denkbar. Das Antriebsteil 1 ist hierzu zweckmässigerweise mit einem Ansatz versehen, in dem ein Lichtübertragungsring angeordnet ist, der im gekuppelten Zustand der beiden Handstückteile von einem weiteren in der Darstellung nicht gezeigten Lichtübertragungsring im Übergangsstück 17 des Griffteiles 7 übergriffen wird. Die Anordnung des Lichtübertragungsringes in dem konisch geformten Übergangsstück 17 ist insofern vorteilhaft, als dieser konische Teile ohnehin bei den Handstückanordnungen dieser Gattung vorhanden ist, um einen weichen Übergang von dem im Durchmesser grösseren Antriebsteil 1 auf den im Durchmesser kleineren Griffteil 7 zu bekommen; somit also kein zusätzlicher Platz benötigt wird.

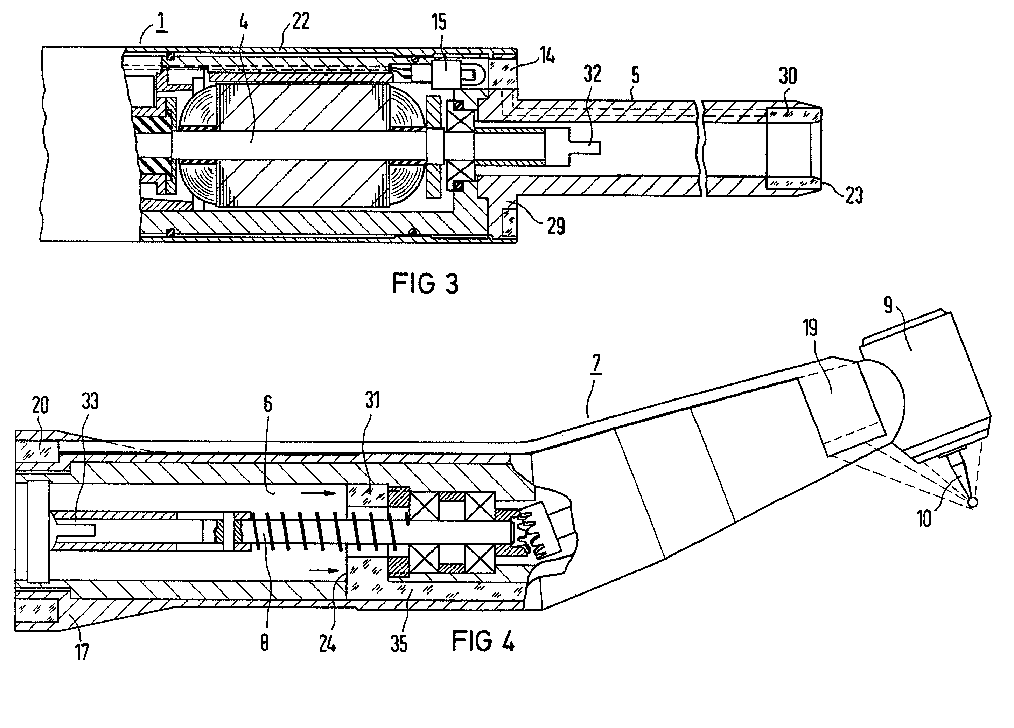

Die Fig. 3 und 4 zeigen Einzelheiten der in Fig. 1 aufgezeigten Lösung, wobei der besseren Übersichtlichkeit wegen auf die Darstellung der an sich bekannten mechanischen Kupplungsmittel 11, 12 verzichtet wird.

Die Fig. 3 zeigt im Längsschnitt das Antriebsteil 1 in der Ausführung mit der Glühlampe 15 als Lichtquelle zur Speisung des Lichtübertragungsringes 14. Nachdem die Konstruktion des Antriebsmotors 1 an sich bekannt ist, werden Details des Motors hier nicht näher erläutert. Aus der Darstellung ist ersichtlich, dass der Lichtübertragungsring 14 in einem Flansch 29 des Führungszapfens 5 angeordnet ist. Lichtein- und -austritt erfolgen bei der Anordnung also stirnseitig. Die elektrischen Leitungen der Lampe 15 sind in einem nicht näher dargestellten Hohlkanal des Stators verlegt.

Die Fig. 4 zeigt das in Fig. 1 schaubildlich dargestellte Griffteil 7 teilweise im Längsschnitt. Der Lichtübertragungsring 20, an dem sich der zum Kopfgehäuse 9 führende Lichtleiter 21 anschliesst, ist hier in eine Ausdrehung des konischen Übergangsstückes 17 eingelegt.

In den Fig. 3 und 4 ist die in Fig. 1 bereits angedeutete Alternativlösung einer Lichtübertragung über an den Stirnflächen 23, 24 des Führungszapfens 5 und des Griffteils 7 angeordnete Lichtübertragungsringe mit eingezeichnet. Im gekuppelten Zustand, wenn also der Mitnehmer 32 (Fig. 3) der Antriebswelle sich mit dem entsprechenden Gegenglied 33 des Triebwellenabschnittes 8 in Eingriff befindet, liegen die stirnseitigen Flächen 23, 24 der Lichtübertragungsringe 30 und 31 flächig aneinander. Die Weiterführung des Lichts erfolgt nach dem Lichtübertragungsring 31 mittels eines Lichtleiters 35.

Die Lichtübergabe vom Antriebsteil 1 auf das Griffteil 7 kann auch punktförmig erfolgen, z.B. indem die Glühlampe 15, unter Wegfall des Lichtübertragungsringes 14, direkt den Lichtübertragungsring 20 im Griffteil 7 ausleuchtet, oder indem stirnseitig des Antriebsteils das Ende eines im Querschnitt kreisförmigen Lichtleiters mündet.

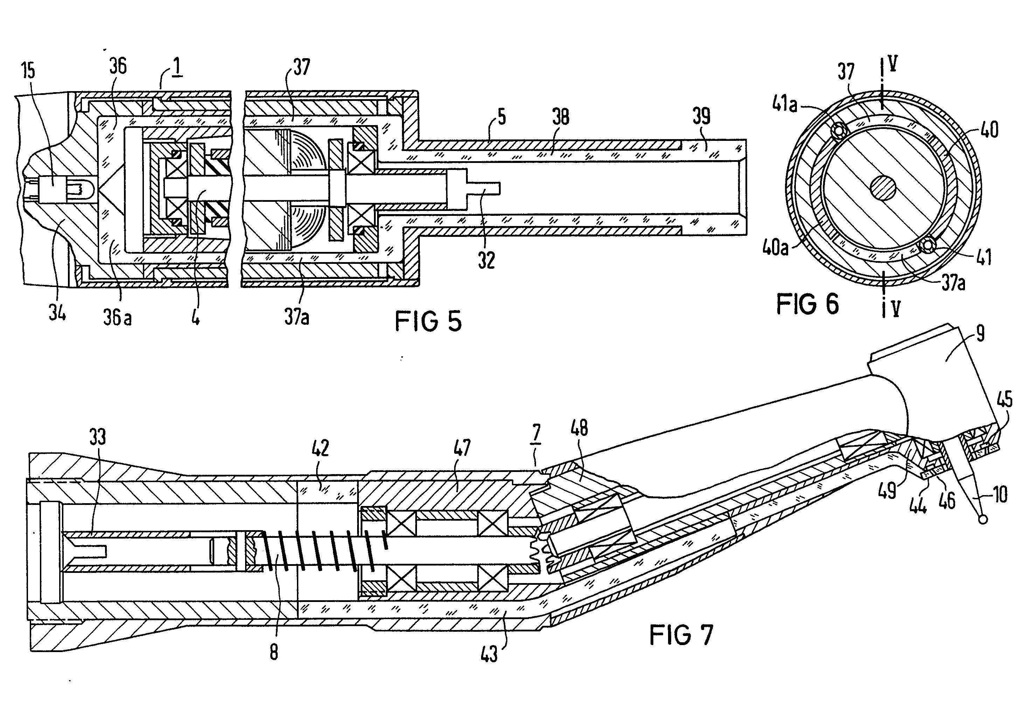

Die Fig. 5 zeigt eine Ausführung, bei der die Glühlampe 15 in einem Anschlussteil 34 des Antriebsteils angeordnet ist. Im optischen Zentrum der Glühlampe 15 sind zwei Endstücke 36, 36a mit jeweils unter 45° abgeschrägten verspiegelten Flächen zusammengeführt, die das Licht von der Glühlampe 15 übernehmen und in Lichtleitkörper 37, 37a überführen, die wiederum optisch mit einem rotationssymmetrischen hülsenförmigen Teil 38 gekuppelt sind. Das Teil 38 weist am Ende des Führungszapfens 5 eine ringförmige Fläche 39 auf, an der das Licht radial austritt.

Wie aus der Querschnittsdarstellung in Fig. 6 hervorgeht, sind die beiden Lichtleitkörper 37, 37a zwischen zwei Magnetschalen 40, 40a des Stators des Elektromotors angeordnet. Die dazwischenliegenden Kanäle 41, 41a dienen in an sich bekannter Weise zur Zuführung eines fluiden Kühlmittels (Wasser oder Spray). Der Verlauf dieser Kanäle soll, da bekannt, hier nicht weiter aufgezeigt und erläutert werden.

Die Fig. 7 zeigt die zu dem Antriebsteil 1 nach Fig. 5 passende Lichtführung im Griffteil 7. Im gekuppelten Zustand, wenn sich also Antriebswelle 4 mit dem Triebwellenabschnitt 8 in Eingriff befindet, steht die ringförmige Fläche 39 des Lichtleitkörpers 38 am Führungszapfen 5 der ringförmigen Fläche des Lichtübertragungsringes 42 korrespondierend gegenüber, wodurch eine radiale Lichtübergabe bzw. -übernahme gegeben ist. Die Weiterleitung des Lichts vom Lichtübertragungsring 42 zum Kopfteil 9 erfolgt über einen im Querschnitt runden Lichtleiter 43, der in einen Deckel 44 mündet, welcher an dem dem Werkzeug 10 zugewandten stirnseitigen Ende des Kopfgehäuses 9 angeordnet ist und den äusseren Abschluss eines mit 45 bezeichneten Spraykanals bildet. Der Deckel 44 ist aus lichtleitendem Material und enthält zum Austritt des Kühlmediums aus dem Spraykanal 45 ein oder mehrere Austrittsöffnungen 46.

Anstelle der Lichtführung über einen einzelnen, gesondert im Griffteil anzuordnenden Lichtleiter kann auch dieser selbst bzw. Teile von ihm zur Lichtführung herangezogen werden. Denkbar ist es z.B., das Licht von dem Lichtübertragungsring 42 auf die dann aus lichtleitendem Material gefertigten Teile 47, 48 und 49 überzuführen.

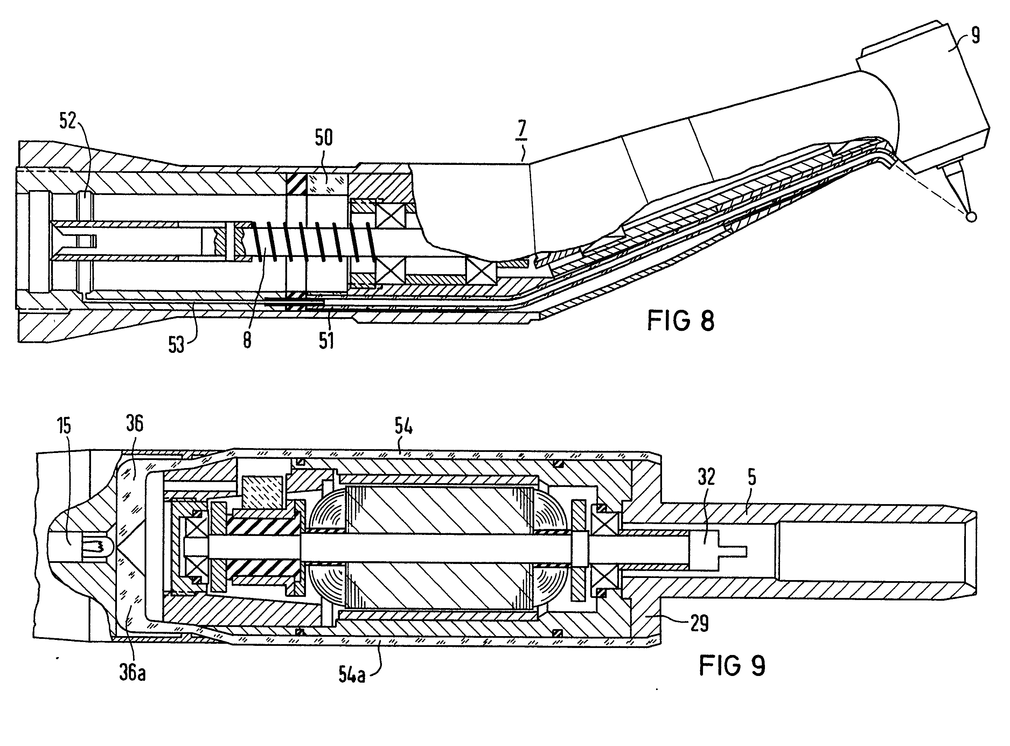

Die Fig. 8 zeigt eine Ausführungsform, bei der das Licht von einem Lichtübertragungsring 50 in ein Glasrohr 51 übergeleitet wird, welches dazu dient, in seinem Inneren Kühlmedium, welches in bekannter Weise vom Antriebsteil über einen Ringkanal 52 und eine achsparallele Mediumleitung 53 herangeführt wird, an das Kopfteil 9 zu leiten.

Die Fig. 9 zeigt eine Ausführungsform, bei der, abweichend von der nach Fig. 5, das von der Glühlampe 15 auf die beiden Endstücke 36, 36a geworfene Licht von zwei Halbschalen 54, 54a weitergeleitet wird, die den äusseren Mantel des Antriebsmotors umgeben und, wie in Fig. 3 dargestellt, stirnseitig im Flansch 29 des Führungszapfens 5 enden. Das Licht kann dann entweder, wie in den Fig. 3 und 4 dargestellt, achsparallel oder, wie bei der Beschreibung der Fig. 2 bereits angedeutet, durch übergreifen der Halbschalen 54, 54a mittels eines hülsenartigen Endstückes des Griffteils radial übergeben werden.

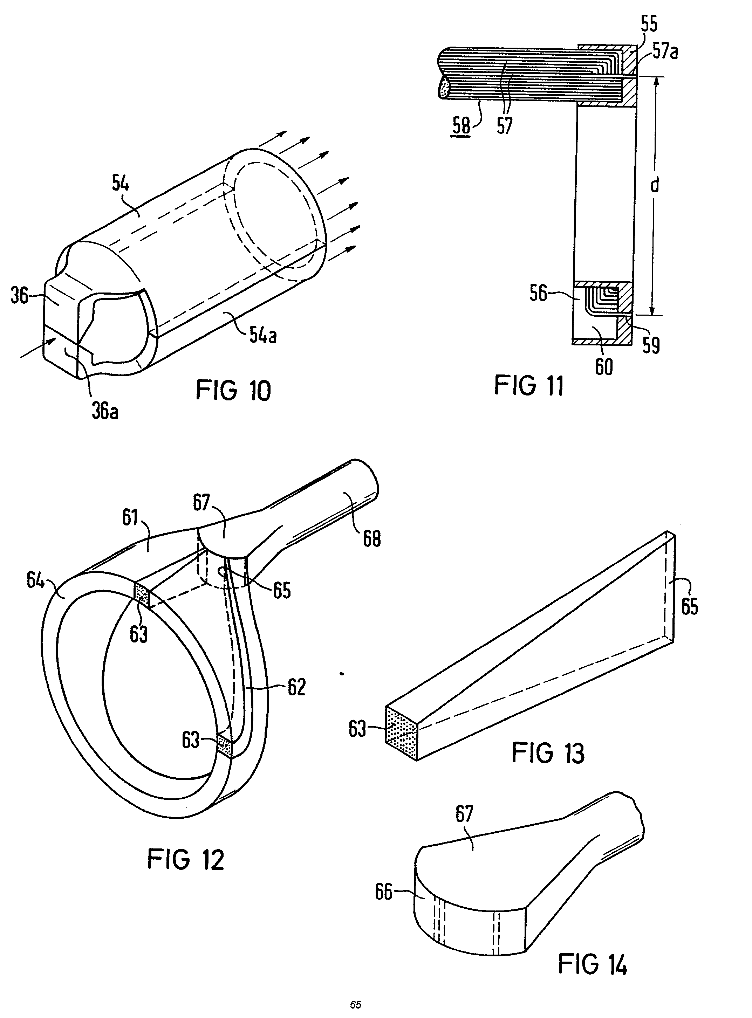

Die Fig. 10 zeigt den kompletten Lichtübertragungskörper in einer schaubildlichen Darstellung.

Wenngleich in den beschriebenen Ausführungsbeispielen stets zwei miteinander korrespondierende Lichtübertragungsringe vorgesehen sind, ist es doch denkbar und im Rahmen der Erfindung, nur einen Lichtübertragungsring am einen Handstückteil, vorteilhafterweise an dem Handstückteil, welches das Licht weiterführt, anzuordnen, und am anderen Handstückteil korrespondierend zum Lichtübertragungsring ein oder mehrere am Umfang angeordnete Lichtquellen vorzusehen. Solche Lichtquellen können sowohl Lampen als auch von extern gespeiste Lichtleiter sein, die unmittelbar an den Stirnflächen des betreffenden Handstückteiles enden.

Nachfolgend werden mehrere Ausführungsbeispiele einer stirnseitigen Lichtübertragung beschrieben. Die in den Fig. 11 bis 16 gezeigten Ausführungsformen sind vom Prinzip her auch dazu geeignet, das Licht radial zu übergeben, wenn die entsprechenden Lichtleiterenden mit den Lichtaustritts- bzw. -eintrittsflächen radial am Umfang des betreffenden Handstückteils, wie beispielsweise in den Fig. 5 und 7 aufgezeigt, angeordnet sind.

Die Fig. 11 zeigt eine Ausführungsform eines Lichtübertragungsringes, der dazu geeignet ist, das Licht in Achsrichtung vom einen zum anderen Handstückteil zu übertragen. Ein solcher Lichtübertragungsring kann z.B., für die Positionen 14, 20, 30 und 31 der Fig. 3, 4 vorgesehen sein. Der Lichtübertragungsring wird hier gebildet durch ein Trägerteil 55, welches eine ringförmige Aussparung 56 aufweist, in der einzelne Lichtleitfasern 57$_{1...n}$ eines Lichtleitfaserbündels 58 verlegt sind, und zwar so, dass die Lichtleitfaserenden 57a auf einem Kreis mit dem Durchmesser d gleichmässig am Umfang verteilt angeordnet sind. Hierzu sind im Trägerteil 55 dem Durchmesser der einzelnen Lichtleitfasern entsprechende Aussparungen, z.B. Bohrungen 59, vorgesehen, durch die die Lichtleitfasern gezogen werden. Der nach Verlegung der Lichtfasern bestehende Hohlraum 60 wird durch ein geeignetes Füllmaterial, z.B. ein Giessharz, ausgegossen, wodurch die einzelnen Lichtleitfasern im Trägerteil 55 fixiert sind. Um eine plane Stirnfläche zu bekommen, wird das Trägerteil 55 nach der Montage der Lichtleiter stirnseitig überschliffen.

Durch die vorgeschlagene Anordnung ist ein Lichtfluss von einem Lichtleiter mit kreisförmigem Querschnitt und damit punktförmiger Abstrahlung auf einem demgegenüber wesentlich grösseren Durchmesser möglich und umgekehrt. Zur Verbesserung der Lichtintensität können mehrere solcher kreisförmig angeordneter Lichtleitfasern konzentrisch übereinander im Trägerteil 55 angeordnet sein.

Denkbar, und im Rahmen der Erfindung liegt es, die Lichtleitfaserenden nicht stirnseitig eines Kreisringes, sondern an der Umfangsfläche eines Ringes enden zu lassen, wodurch eine radiale Lichtübertragung ähnlich den Positionen 25/27 in Fig. 2 oder 39/42 in Fig. 5/7 möglich ist.

Die Fig. 12 bis 14 zeigen eine andere Ausführungsform eines Lichtübertragungsringes. Hier sind auf einem ringförmigen Trägerteil 61 am Umfang verteilt eine Vielzahl von einzelnen Lichtleitern 62 angeordnet, und zwar so, dass deren Enden 63 stirnseitig mit der Ringfläche 64 des Trägerteils 61 abschliessen und diesen Kreisringquerschnitt vollständig ausfüllen und dass deren andere Enden 65 (Fig. 13) optisch mit einer Fläche 66 eines Sammelprismas 67 (Fig. 14) gekoppelt sind. Die einzelnen Lichtleiter 62 sind hierzu unter Beibehaltung der Querschnittsflächen 63, 65 etwa keilförmig ausgebildet. An das Sammelprisma 67 schliesst sich sodann ein Lichtleiter 68 mit wiederum kreisförmigem Querschnitt an. Das Sammelprisma 67 sowie die einzelnen Lichtleiter 62 sind vorteilhafterweise aus optischem Glas gefertigt, können jedoch auch aus einzelnen Lichtleitfasern gebildet werden.

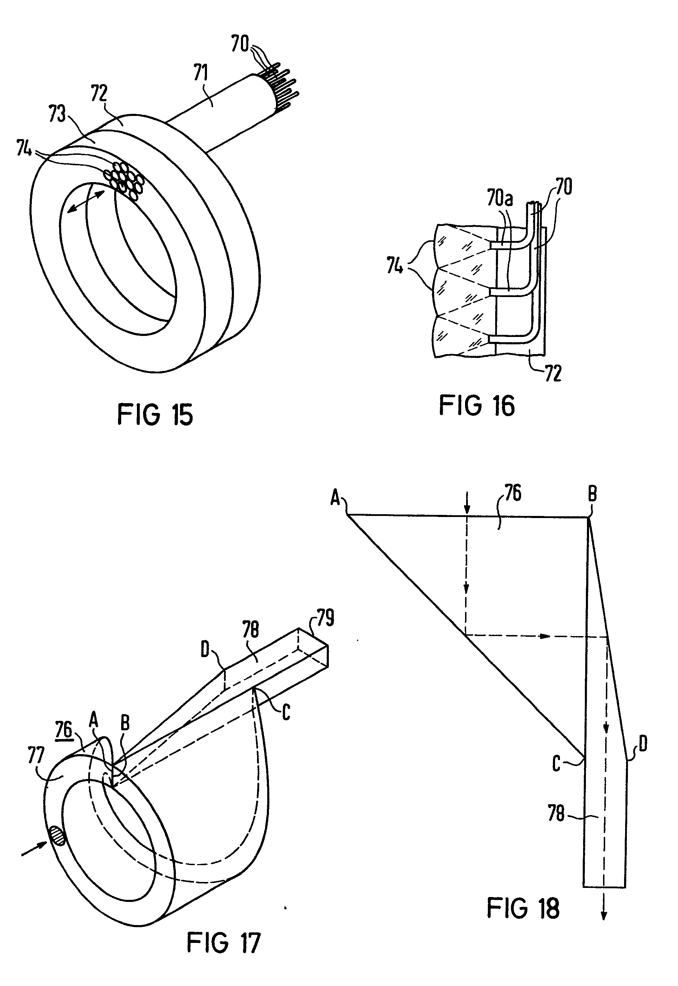

Die Fig. 15 und 16 zeigen eine andere Ausführungsform eines Lichtübertragungsringes. Hier sind die einzelnen Lichtleitfasern 70 eines Lichtleiterbündels 71 gleichmässig in einem kreisringförmigen Träger 72 gefasst. Auf den Träger 72 ist stirnseitig ein Ring 73 mit einer Vielzahl von optischen Linsen 74 aufgesetzt, welche die Lichtübertragungsfläche bilden und das einfallende Licht in die im Brennpunkt angeordneten Lichtleitfaserenden 70a der Lichtleiter 70 konzentrieren (Fig. 16.) Auch hier entspricht, wie bei dem zuvor beschriebenen Ausführungsbeispiel, die Summe der am Umfang im Trägerteil 72 angeordneten Lichtleiter 70 der Anzahl der in dem Faserbündel 71 enthaltenen Lichtleitfasern. Die Sammellinsen 74 sind vorteilhafterweise so angeordnet, dass die entstehenden Abstände zwischen den einzelnen Lichtleitfaserenden 70a voll ausgefüllt sind.

Die Fig. 17 zeigt ein Ausführungsbeispiel eines Lichtübertragungsringes, welcher besonders für eine punktförmige Einspeisung des Lichtes geeignet ist. Ein solcher Lichtübertragungsring ist also dann vorzusehen, wenn nur das eine Handstückteil einen Lichtübertragungsring, das andere Handstückteil dagegen, z.B. aus Platzgründen, nur eine punktuelle Übertragung des Lichts bei voller Drehbarkeit der beiden Handstückteile gestattet. Der Lichtübertragungsring besteht hier aus einem Umlenkprisma 76, welches eine kreisringförmige Lichteintrittsfläche 77 aufweist und optisch gekoppelt ist mit einem Sammelprisma 78, an dessen freiem Ende 79 sich ein das Licht weiterführender Lichtleiter anschliessen kann. Die Fig. 18 zeigt die Abwicklung des Umlenkprismas 76. Dieses bildet in der Abwicklung ein rechtwinkliges Dreieck mit den Ecken A, B, C; die Fläche entlang der Kathete A, B (Stirnfläche 77) bildet den Lichteintritt, die Fläche entlang der Hypothenuse A, C ist verspiegelt und führt deshalb zu der erforderlichen Umlenkung des Lichts entsprechend der Pfeildarstellung. Die Schräge B, D des Sammelprismas 78 ist so gewählt, dass das Licht etwa in Richtung des an das Ende 79 angekoppelten Lichtleiters weitergeleitet wird. Um eine optimale Lichtführung zu bekommen, sind auch die übrigen Oberflächen der beiden Glaskörper 76, 78 aussen verspiegelt.

Die beschriebene Ausführungsform ist besonders für einen punktförmigen Lichteinfall an der Stirnfläche 77 des Glaskörpers 76 (siehe Pfeil in Fig. 17) geeignet; sie kann selbstverständlich auch für eine kreisringförmige Lichtankoppelung verwendet werden.

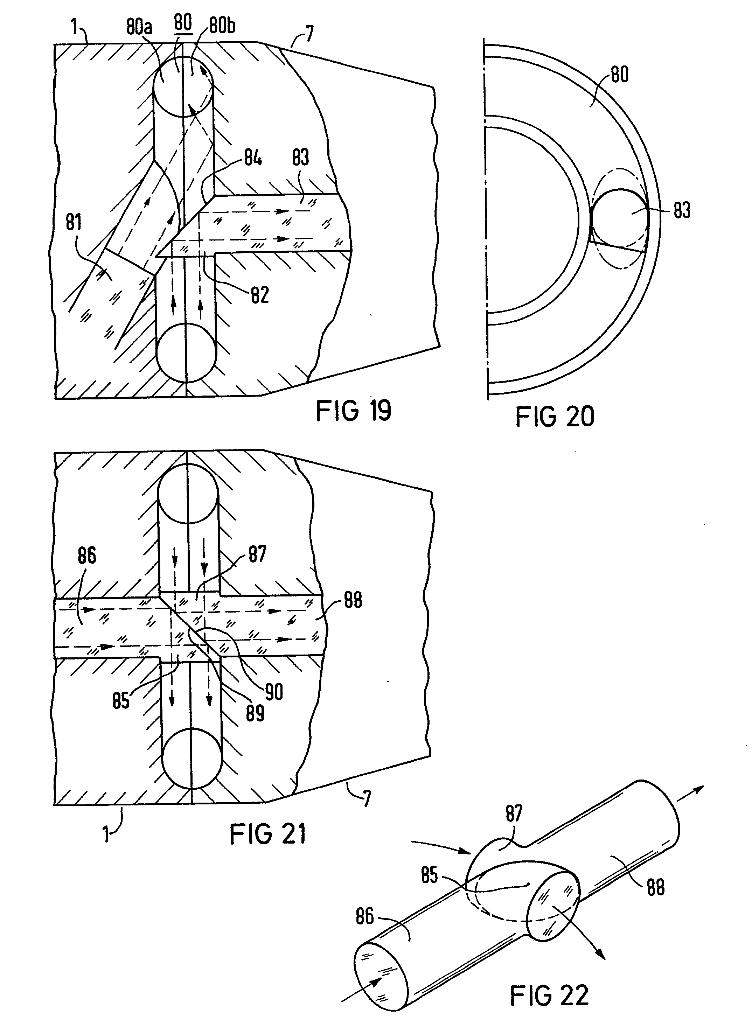

Die in den Fig. 19 bis 22 dargestellten Ausführungsformen sind ausschliesslich dann anwendbar, wenn an beiden Handstückteilen ein Lichtübertrager vorgesehen werden kann. Der Lichtübertrager in beiden Handstückteilen 1 bzw. 7 besteht hier aus einem Ringkanal 80 mit jeweils einer Hälfte 80a bzw. 80b, die dem einen (1) bzw. dem anderen Handstückteil (7) zugeordnet ist. Der gesamte Ringkanal 80 ist innenwandig verspiegelt oder hochglanzpoliert, wodurch das über den Lichtleiter 81 eingespeiste Licht an den Wandungen (siehe Pfeildarstellung) reflektiert wird.

In den Ringraum 80 hinein ragt ein Endstück 82 eines das Licht weiterführenden Lichtleiters 83, welches im anderen Handstückteil 7 angeordnet ist. Das Endstück 82 bildet ein Umlenkprisma; seine unter 45° abgeschrägte Fläche 84 ist ebenfalls optisch verspiegelt, so dass das vom Ringkanal 80 ausgehende Licht entsprechend der Pfeildarstellung achsparallel umgelenkt wird. Nachdem, wie aus Fig. 20 ersichtlich, der Lichtleiter 83 ausserhalb der Längssymmetrieachse der Handstückteile angeordnet ist, ist eine Drehbarkeit der beiden Handstückteile um 360° gegeben.

Eine ähnliche Lösung, jedoch mit achsparalleler Einspeisung des Lichts, zeigt die Fig. 21. Das Ende 85 des Lichtleiters 86 ist hier, ebenso wie das das Licht weiterführende Ende 87 des Lichtleiters 88, als Umlenkprisma ausgebildet. Die beiden unter 45° verlaufenden Flächen 89, 90 sind optisch gegeneinander isoliert, so dass keine Lichtbrechung an den beiden Lichtleiterenden auftreten kann.

Die Fig. 22 zeigt die beiden Lichtleiterenden 85, 87 in einer perspektivischen Darstellung. Auch bei dieser Lösung sind die Lichtleiterenden ausserhalb der Längssymmetrieachse der Handstückteile angeordnet, wodurch in jeder Drehlage der Handstückteile eine Lichtübertragung gegeben ist.

Wenngleich in den gezeigten Ausführungsbeispielen die Kupplungsstelle (Trennstelle) stets auch die Drehstelle der beiden Handstückteile ist, so ist dies nicht zwingend erforderlich. Dreh- und Trennstelle können also auch getrennt voneinander an verschiedenen Stellen der Handstückteile angeordnet sein. Der oder die Lichtübertrager sind dann an der Drehstelle anzuordnen; eine Lichtübertragung an der Trennstelle kann, nachdem hier keine Drehung erfolgt, z.B. durch stumpf aneinanderstossende Lichtleiterenden erfolgen.

**Patentansprüche**

1. Zahnärztliche Handstückanordnung mit zwei um ihre Längsachsen gegeneinander verdrehbaren und vorzugsweise voneinander trennbaren Handstückteilen (1, 7), welche die Drehbarkeit der Teile (1, 7) gewährleistende Führungsglieder (5, 6), z.B. einen Führungszapfen (5) im einen (1) und eine dazu passende Führungshülse (6) im anderen Handstückteil (7), enthalten, mit einer Rasteinrichtung (11, 12) zur axialen Fixierung der beiden Handstückteile (1, 7) im gekuppelten Zustand sowie mit einer zum Kopfteil (9) der Handstückanordnung führenden Lichtleitanordnung, dadurch gekennzeichnet, dass die Handstückteile (1, 7) eine inkorporierte Lichtführung (14, 16; 20, 21; 25, 26; 27, 28; 30, 31; 35–39; 42, 43; 50, 51; 54, 54a) enthalten mit Lichtzuführungselementen (14, 16, 26, 36, 37, 38, 54) im einen (1) und Lichtweiterführungselementen (21, 28, 35, 38, 43, 51) im anderen Handstückteil (7), dass wenigstens eines der beiden Handstückteile (1 bzw. 7) an einander benachbarten Flächen (13, 18) der Führungsglieder (5, 6) einen koaxial zum einen Führungsglied (5) angeordneten und mit den Lichtführungselementen (16, 26, 37, 38, 54) dieses Handstückteils (1 oder 7) optisch verbundenen ringförmigen Lichtübertrager (14, 25, 30, 39, 54 bzw. 20, 27, 31, 42, 50) enthält, dem im gekuppelten Zustand der Handstückteile an Flächen des anderen Handstückteils (7 bzw. 1) mit den Lichtführungselementen (21, 28, 35, 43, 51 bzw. 16, 26, 37, 38, 54) dieses Handstückteils optisch verbundene Lichtübernahme- bzw. -übergabemittel (20, 27, 31, 42, 50 bzw. 14, 25, 30, 39, 54) korrespondierend gegenüberstehen.

2. Handstückanordnung nach Anspruch 1, dadurch gekennzeichnet, dass der ringförmige Lichtübertrager (20, 27, 31, 42, 50) an dem Handstückteil (7) angeordnet ist, welches die lichtweiterführenden Elemente (21, 28, 35, 43, 51) enthält.

3. Handstückanordnung nach Anspruch 1 oder 2, dadurch gekennzeichnet, dass zur Lichtzuführung ein oder mehrere mit ihrem Lichtaustrittsende dem Lichtübertrager (20) korrespondierend gegenüberstehende Lichtquellen in Form von Glühlampen (15) oder Lichtleitern (16, 26, 36, 37, 38, 54) vorgesehen sind, die bei mehreren am Umfang des Handstückteils (1) gegeneinander versetzt angeordnet sind.

4. Handstückanordnung nach Anspruch 1, dadurch gekennzeichnet, dass an beiden Handstückteilen (1, 7) ein Lichtübertrager (14, 20; 25, 27; 39, 42; 50, 54) angeordnet ist.

5. Handstückanordnung nach einem der Ansprüche 1 bis 4, dadurch gekennzeichnet, dass der Lichtübertrager (14, 20, 30, 31) an einer stirnseitigen Fläche (13, 18, 23, 24) des Handstückteils (1, 7) angeordnet ist.

6. Handstückanordnung nach einem der Ansprüche 1 bis 4, dadurch gekennzeichnet, dass der Lichtübertrager (25, 27, 39, 42, 50) an einer Umfangsfläche des Handstückteils (1, 7) mit radialer Lichtaus- bzw. -eintrittsfläche angeordnet ist.

7. Handstückanordnung nach Anspruch 5, dadurch gekennzeichnet, dass bei Handstückteilen (1, 7) mit unterschiedlichen Aussendurchmessern (d, d₂) und einem, vorzugsweise konisch ausgebildeten, Übergangsstück (17) am einen Handstückteil (7) zur Anpassung der Aussenkonturen der Handstückteile, der Lichtübertrager (20) in diesem Übergangsstück (17) angeordnet ist.

8. Handstückanordnung nach Anspruch 5, dadurch gekennzeichnet, dass bei einem Antriebsmotor, vorzugsweise einem Elektromotor (2), mit einem am Motorgehäuse (22) angeflanschten, die Antriebswelle umgebenden Führungszapfen (5), ein Lichtübertragungsring (14) im Flansch (29) angeordnet ist und im Motorgehäuse (22) eine den Lichtübertragungsring (14) speisende Lichtquelle (15), vorzugsweise eine Glühlampe, angeordnet ist.

9. Handstückanordnung nach Anspruch 8, dadurch gekennzeichnet, dass die Lichtquelle (15) extern des Lichtübertragungsringes (14) im Motorgehäuse (22) angeordnet ist und den Lichtübertragungsring (14) stirnseitig beleuchtet.

1o. Handstückanordnung nach Anspruch 5 oder 6, dadurch gekennzeichnet, dass bei einem Elektroantriebsmotor mit permanentmagnetischem Antriebsmotor (1) eine Lichtquelle (15) an der Anschlussarmatur (34) des Antriebsmotors (1) angeordnet ist und im optischen Zentrum der Lichtquelle (1) das Ende (36, 36a) eines zwischen den Magnetschalen (40, 40a) des Motors angeordneten, im Querschnitt kreisringförmigen Lichtübertragungskörpers (37, 37a) angeordnet ist.

11. Handstückanordnung nach Anspruch 10, dadurch gekennzeichnet, dass der Lichtübertragungskörper (37, 37a) aus zwei am Umfang angeordneten Halbschalen besteht, deren eine stirnseitige Enden (36, 36a) im optischen Zentrum der Lichtquelle (15) zusammengeführt sind.

12. Handstückanordnung nach Anspruch 5 oder 6, dadurch gekennzeichnet, dass bei einem Antriebsmotor, vorzugsweise einem Elektroantriebsmotor (1), mit einem am Motorgehäuse (22) angeflanschten, die Antriebswelle (4) des Motors umgebenden Führungszapfen (5) ein um das Motorgehäuse herum angeordneter oder dessen Mantelfläche bildender hülsenförmiger Lichtleitkörper (54, 54a) vorgesehen ist.

13. Handstückanordnung nach Anspruch 6, dadurch gekennzeichnet, dass bei einem Handstückteil (7), welches ein Kopfgehäuse (9) zur Aufnahme eines Drehwerkzeuges (10) sowie im Inneren angeordnete Triebwellenabschnitte (8) aufweist, welche durch einen Mitnehmer (32) mit einem am anderen Handstückteil angeordneten Gegenglied (33) in Eingriff bringbar sind, ein im Inneren der Führungshülse (6) angeordneter Lichtübertragungsring (27, 31, 42, 50) angeordnet ist, der mit einem zum Kopfgehäuse (9) führenden Lichtleiter (28, 35, 51, 43) verbunden ist.

14. Handstückanordnung nach Anspruch 13, dadurch gekennzeichnet, dass der zum Kopfgehäuse (9) führende Lichtleiter (43) das Kopfgehäuse (9) an der dem Werkzeug (10) zugewandten Stirnseite umgibt.

15. Handstückanordnung nach Anspruch 14, dadurch gekennzeichnet, dass der Lichtleiter (43) an der Stirnseite des Kopfgehäuses (9) eine aus lichtleitendem Material bestehende Abschlusskappe (44) eines Sprayringkanals (45), die ein oder mehrere am Umfang angeordnete Sprayaustrittskanäle (46) aufweist, bildet, oder mit einer solchen optisch verbunden ist.

16. Handstückanordnung nach einem der Ansprüche 13 bis 15, dadurch gekennzeichnet, dass der zum Kopfgehäuse (9) führende Lichtleiter (51) rohrförmig ausgebildet und dessen Hohlkanal zur Leitung eines Kühlmediums (Wasser, Spray) verwendet ist.

17. Handstückanordnung nach einem der Ansprüche 13 bis 16, dadurch gekennzeichnet, dass das Handstückteil (7) mit dem Kopfgehäuse (9) oder Teile davon (47 bis 49) zur Lichtführung ausgebildet sind.

18. Handstückanordnung insbesondere nach Anspruch 17, dadurch gekennzeichnet, dass die die Triebwellenlagerung aufnehmenden Körper (47 bis 49) des Handstückteils (7) einschliesslich des Kopfgehäuses (9) aus lichtleitendem Material gefertigt sind und die dem Werkzeug (10) zugewandte Stirnseite des Kopfgehäuses als Lichtaustrittsfläche (44) ausgebildet ist.

19. Handstückanordnung nach einem der Ansprüche 1 bis 18, dadurch gekennzeichnet, dass der Lichtübertrager (14, 20, 25, 27, 30, 31, 39, 42, 50) aus einer Vielzahl von einzelnen Lichtleitfasern (57) besteht, deren Enden (57a) am Umfang eines Kreises oder an einer kreisringförmigen Fläche eines Trägers (55) gleichmässig verteilt angeordnet sind.

20. Handstückanordnung nach Anspruch 19, dadurch gekennzeichnet, dass die Lichtleitfaserenden (57a) in einem Ring (55) gefasst sind, der zu diesem Zweck eine ringförmige Ausnehmung (56) und am Umfang eines Kreises (Durchmesser d) angeordnete, jeweils dem Durchmesser einer einzelnen Lichtleitfaser (57) entsprechende Ausnehmungen (59) zur Fixierung der Lichtleitfaserenden (57a) enthält, und dass der sich bei verlegten Lichtleitfasern gebildete Hohlraum (6) in der ringförmigen Ausnehmung (56) durch ein Füllmaterial ausgefüllt ist.

21. Handstückanordnung nach Anspruch 20, dadurch gekennzeichnet, dass mindestens zwei konzentrisch zueinander angeordnete Ringe (Durchmesser d, d') mit Lichtleitfasern (57) in dem Träger (55) angeordnet sind.

22. Handstückanordnung nach einem der Ansprüche 1 bis 18, dadurch gekennzeichnet, dass der Lichtübertrager (14, 20, 30, 31) aus einem ringförmigen Träger (61) mit einer Vielzahl von darin angeordneten Lichtleitkörpern (62) gebildet ist, die an dem dem korrespondierend angeordneten Handstückteil zugewandten stirnseitigen Ende einen in ihrer Summe den Kreisquerschnitt (64) des Trägers (61) ausfüllenden Einzelquerschnitt (63) aufweisen und die zum anderen Ende hin unter Beibehaltung ihrer Querschnittsflächen schmaler werdend ausgebildet sind und einen rechteckigen Flächenabschnitt (65) bilden, an dem sich ein mit einem im Handstückteil (1, 7) angeordneten Lichtleiter (68) verbundenes Sammelprisma (67) anschliesst.

23. Handstückanordnung nach Anspruch 22, dadurch gekennzeichnet, dass die einzelnen Lichtleiter (62) und das Sammelprisma (67) aus optischem Glas bestehen.

24. Handstückanordnung nach einem der Ansprüche 1 bis 18, dadurch gekennzeichnet, dass der Lichtübertrager (14, 20, 30, 31) aus einer Vielzahl von einzelnen Lichtleitfasern (70) besteht, deren Enden (70a) auf einem ringförmigen Träger (72) gleichmässig am Umfang verteilt angeordnet sind, und dass auf die stirnseitigen Enden (70a) der Lichtleitfasern (70) ausgerichtete Sammellinsen (74) am Träger (72) angeordnet sind, welche die Lichtübertragungsfläche bilden und das einfallende bzw. austretende Licht in die im Brennpunkt angeordneten Lichtleitfaserenden (70a) konzentrieren.

25. Handstückanordnung nach Anspruch 24, dadurch gekennzeichnet, dass die Linsen (74) in einem optischen Trägermaterial, z.B. Plexiglas, eingebettet sind.

26. Handstückanordnung nach einem der Ansprüche 1 bis 18, dadurch gekennzeichnet, dass der Lichtübertrager (14, 20, 30, 31) aus einem Glaskörper (76) besteht, welcher Licht über eine Ringfläche (77) aufnimmt bzw. abgibt, dass der Glaskörper (76) als Umlenkprisma ausgebildet ist, welches optisch mit einem mit dem lichtweiterführenden Lichtleiterabschnitt verbundenen Sammelprisma (78) verbunden ist.

27. Handstückanordnung nach Anspruch 26, dadurch gekennzeichnet, dass das Umlenkprisma (76) aus einem Körper besteht, der in der Abwicklung ein rechtwinkliges Dreieck (A, B, C) bildet, dessen Flächen entlang der Katheten (A, B; B, C) den Lichtein- bzw. -austritt bilden und deren Flächen entlang der Hypotenuse (A, C) die Lichtstrahlen umlenken, und dass die der einen Kathete (B, C) entsprechende Fläche mit einem keilförmig ausgebildeten Prisma (78) optisch verbunden ist, an deren sich erweiterndem stirnseitigen Ende (79) sich ein das Licht weiterführender Lichtleiter anschliesst.

28. Handstückanordnung nach einem der Ansprüche 4 bis 18, dadurch gekennzeichnet, dass der Lichtübertrager (14, 20; 25, 27, 30, 31, 39, 42, 50) die eine Hälfte (80a bzw. 80b) eines innen verspiegelten oder polierten Rohrringkanales (80) ist, in dem das Endstück (86) eines Lichtleiters einmündet, und dass in der dazu gehörigen anderen, am anderen Handstückteil (7) angeordneten zweiten Hälfte (80b) das Endstück (82, 87) des das Licht weiterführenden Lichtleiters (83, 88) einmündet, an dem über eine schräge Fläche (84, 90) das Licht aus dem Ringkanal (80) abgegriffen wird.

29. Handstückanordnung nach Anspruch 28, dadurch gekennzeichnet, dass das Lichtleiterende (81) in die eine Hälfte (80a) des Rohrringraumes (80) unter einem Winkel von 45 bis 60° einmündet und dass das Lichtleiterende (82) in der zweiten Hälfte (80b) achsparallel angeordnet ist und ein das Licht aus dem Rohrringraum (80) aufnehmendes und achsparallel weiterführendes Umlenkprisma (84) enthält.

30. Handstückanordnung nach Anspruch 28, dadurch gekennzeichnet, dass beide in den Rohrringraum (80) mündende Lichtleitenden (87, 85) mit einem Umlenkprisma versehen sind oder ein solches bilden, und die das Umlenkprisma bildenden Flächen (89, 90) optisch voneinander getrennt sind.

**Claims**

1. A dental handpiece having two handpiece parts (1, 7) which are rotatable against one another about their longitudinal axes and preferably separable from one another, and which comprise guide elements (5, 6) which ensure the rotatability of the components (1, 7), e.g. a guide pin (5) in one handpiece part and a matching guide sleeve (6) in the other handpiece part (7); a locking device (11, 12) for axially fixing the two handpiece parts (1, 7) in the coupled state; and a light-conducting arrangement which leads to the head piece (9) of the handpiece arrangement, characterised in that the handpiece parts (1, 7) include an incorporated light guide unit (14, 16; 20, 21; 25, 26; 27, 28; 30, 31; 35–39; 42, 43; 50, 51; 54, 54a) having light supply elements (14, 16, 26, 36, 37, 38, 54) in the one handpiece part (1) and light transmission elements (21, 28, 35, 38, 43, 51) in the other handpiece part (7); that on mutually adjacent surfaces (13, 18) of the guide elements (5, 6), at least one of the two handpiece parts (1 or 7) comprises an annular light transmitter (14, 25, 30, 39, 54 or 20, 27, 31, 42, 50) which is coaxially arranged to the one guide element (5) and optically connected to the light guide elements (16, 26, 37, 38, 54) of the handpiece part (1 or 7), to which in the coupled state of the handpiece parts, on surfaces of the other handpiece part (7 or 1), light receiving or transmitting means (20, 27, 31, 42, 50 or 14, 25, 30, 39, 54) which are optically connected to the light guide elements (21, 28, 35, 43, 51 or 16, 26, 36, 37, 38, 54) of this handpiece part, are correspondingly opposed.

2. A handpiece arrangement as claimed in Claim 1, characterised in that the annular light transmitter (20, 27, 31, 42, 50) is arranged on the handpiece part (7) which contains the light-transmitting elements (21, 28, 35, 43, 51).

3. A handpiece arrangement as claimed in Claim 1 or Claim 2, characterised in that for the supply of light, one or more light sources are provided in the form of glow lamps (15) or light conductors (16, 26, 36, 37, 38, 54) which are correspondingly opposed to the light transmitter (20) at their light outlet end and which are staggered relative to one another at the periphery of the handpiece component (1).

4. A handpiece arrangement as claimed in Claim 1, characterised in that a light transmitter (14, 20; 25, 27; 39, 42; 50, 54) is arranged on both handpiece parts (1, 7).

5. A handpiece arrangement as claimed in one of Claims 1 to 4, characterised in that the light transmitter (14, 20, 30, 31) is arranged on an end surface (13, 18, 23, 24) of the handpiece part (1, 7).

6. A handpiece arrangement as claimed in one of Claims 1 to 4, characterised in that the light transmitter (25, 27, 39, 42, 50) is arranged on a peripheral surface of the handpiece part (1, 7) with radial light outlet and inlet surfaces.

7. A handpiece arrangement as claimed in Claim 5, characterised in that in the case of handpiece parts (1, 7) having different outer diameters $(d_1, d_2)$ and a preferably conically shaped transition piece (17) on the one handpiece (7) for the adaptation of the outer contours of the handpiece parts, the light transmitter (20) is arranged in the transition piece (17).

8. A handpiece arrangement as claimed in Claim 5, characterised in that in the case of a driving motor, preferably an electromotor (2), having a guide pin (5) which is flangedly connected to the motor housing (22) and surrounds the driving shaft, a light transmission ring (14) is arranged in the flange (29) and in the motor housing (22), there is arranged a light source (15), preferably a glow lamp, which feeds the light transmission ring (14).

9. A handpiece arrangement as claimed in Claim 8, characterised in that the light source (15) is arranged outside the light transmission ring (14) in the motor housing (22) and illuminates the light transmission ring (14) at the end face.

10. A handpiece arrangement as claimed in Claim 5 or Claim 6, characterised in that in the case of an electromotor with a permanently magnetic drive motor (1), a light source (15) is arranged on the connection armature (34) of the drive motor (1) and in the optical centre of the light source (1). there is arranged the end (36, 36a) of a light transmission body (37, 37a) which is arranged between the magnet shells (40, 40a) of the motor and is shaped like an annulus in cross-section.

11. A handpiece arrangement as claimed in Claim 10, characterised in that the light transmission body (37, 37a) consists of two half-shells, the ends (36, 36a) of which at the end face are brought together in the optical centre of the light source (15).

12. A handpiece arrangement as claimed in Claim 5 or Claim 6, characterised in that in the case of a drive motor, preferably an electric drive motor (2), having a guide pin (5) which is flangedly connected to the motor housing (22) and surrounds the driving shaft of the motor (4), there is provided a sleeve-shaped light conducting body (54, 54a) which is arranged around the motor housing or forms the shell of said motor housing.

13. A handpiece arrangement as claimed in Claim 6, characterised in that in the case of a handpiece part (7) which has both a head housing (9) for accomodating a rotary tool (10), and driving shaft sections (8) which are arranged inside and which by means of a follower (32) can be brought into engagement with a counter-member (33) which is arranged on the other handpiece part, a light transmission ring (27, 31, 42, 50) is provided which is positioned inside the guide sleeve (6) and is connected to a light conductor (28, 35, 51, 43) leading to the head housing (9).

14. A handpiece arrangement as claimed in Claim 13, characterised in that the light conductor (43) leading to the head housing (9) surrounds the head housing (9) at the end face facing the tool (10).

15. A handpiece arrangement as claimed in Claim 14, characterised in that at the end face of the head housing (9), the light conductor (43) forms an end cap (44) of an annular spray channel (45) which cap consists of a light-conducting material and has one or more spray outlet channels (46) arranged on the periphery, or is optically connected to an end cap.

16. A handpiece arrangement as claimed in one of Claims 13 to 15, characterised in that the light conductor (51) leading to the head housing (9) is tubular and its hollow bore is used for carrying a coolant (water, spray).

17. A handpiece arrangement as claimed in one of Claims 13 to 16, characterised in that the handpiece part (7), together with the head housing (9), or parts thereof (47 to 49) is designed for light conduction.

18. A handpiece arrangement, in particular as claimed in Claim 17, characterised in that the bodies (47 to 49) of the handpiece part (7), which accommodate the driving shaft bearing, including the head housing (9), are made of a light-conducting material and the end face of the head housing which faces the tool (10) is formed as a light outlet surface (44).

19. A handpiece arrangement as claimed in one of Claims 1 to 18, characterised in that the light transmitter (14, 20, 25, 27, 30, 31, 39, 42, 50) consists of a plurality of individual light conducting fibres (57), the ends (57a) of which are evenly distributed on the circumference of a circle or on a surface of a carrier (55) shaped like a circular ring.

20. A handpiece arrangement as claimed in Claim 19, characterised in that the light conducting

fibre ends (57a) are combined in a ring (55) which for this purpose comprises an annular recess (56) and recesses (59) which are arranged on the circumference of a circle (diameter d) and respectively correspond to the diameter of an individual light conducting fibre (57) and which serve to fix the light conducting fibre ends (57a); and that the cavity (6), which is formed when the light conducting fibres are positioned in the annular recess (56) is filled with a filler.

21. A handpiece arrangement as claimed in Claim 20, characterised in that at least two rings (diameter d, d') arranged concentrically with respect to one another and have light conducting fibres (57), are arranged in the carrier (55).

22. A handpiece arrangement as claimed in one of Claims 1 to 18, characterised in that the light transmitter (14, 20, 30, 31) consists of an annular carrier (61) having a plurality of light conducting bodies (62) which are arranged therein and which at the end on the end face which faces the correspondingly arranged handpiece part have individual cross-sections which in their totality fills the circular cross-section (64) of the carrier (61) and which light conducting bodies narrow towards the other end retaining their cross-sectional surfaces and form a rectangular surface section (65) which is followed by a collecting prism (67) connected to a light conductor (68) arranged in the handpiece part (1, 7).

23. A handpiece arrangement as claimed in Claim 22, characterised in that the individual light conductors (62) and the collecting prism (67) are made of optical glass.

24. A handpiece arrangement as claimed in one of Claims 1 to 18, characterised in that the light transmitter (14, 20, 30, 31) consists of a plurality of individual light conducting fibres (70), the ends (70a) of which are evenly distributed at the circumference of an annular carrier (72); and that collecting lenses (74) directed to the ends of the light conducting fibres (70) on the end face are arranged on the carrier (72), which collecting lenses form the light transmission surface and concentrate the incident or emergent light onto the light conducting fibres (70a) which are arranged at the focal point.

25. A handpiece arrangement as claimed in Claim 24, characterised in that the lenses (74) are embedded in an optical carrier material, e.g. plexiglass.

26. A handpiece arrangement as claimed in one of Claims 1 to 18, characterised in that the light transmitter (14, 20, 30, 31) consists of a glass body (76) which absorbs and emits light by way of an annular surface (77); that the glass body (76) is formed as a deviating prism which is optically connected to a collecting prism (78) linked with the light-transmitting light conductor section.

27. A handpiece arrangement as claimed in Claim 26, characterised in that the deviating prism (76) consists of a body which in the developed view forms a right-angled triangle (A, B, C), whose surfaces form the light inlet and light outlet along the short sides (A, B; B, C) and whose surface along the hypotenuse (A, C) divert the light beams; and that the surface corresponding to the one cathetus (B, C) is optically connected to a wedge-shaped prism (78), to the end face of which at the widening end (79) there is connected a light conductor which transmits the light.

28. A handpiece arrangement as claimed in one of Claims 4 to 18, characterised in that the light transmitter (14, 20; 25, 27, 30, 31, 39, 42, 50) represents one half (80a and 80b) of an internally mirror-coated or polished tubular annular channel (80), into which the end piece (86) of a light conductor opens, and that the end piece (82, 87) of the light conductor (83, 88) which transmits the light, and at which the light is tapped from the ring channel (80) by means of an oblique surface (84, 90), opens into the associated other second half (80b) which is arranged on the other handpiece part (7).

29. A handpiece arrangement as claimed in Claim 28, characterised in that the light conductor end (81) opens into the one half (80a) of the tubular annular space (80) at an angle of 45 to 60°; and that the end (82) of the light conductor is arranged in the second half (80b) so as to be axially parallel and comprises a deviating prism (84) which receives the light from the tubular annular space (80) and transmits it in an axially parallel fashion.

30. A handpiece arrangement as claimed in Claim 28, characterised in that both light conductor ends (87, 85) which open into the tubular annular space (80) are provided with a deviating prism or form a deviating prism; and the surfaces (89, 90) forming the deviating prism are optically separated from one another.

**Revendications**

1. Pièce à main de dentisterie comportant des éléments de pièce à main (1, 7) pouvant tourner l'un par rapport à l'autre suivant leurs axes longitudinaux et pouvant être de préférence séparés l'un de l'autre et qui contiennent, l'un (1), des organes de guidage (5, 6) garantissant la mobilité en rotation des éléments (1, 7), par exemple un embout de guidage (5), et l'autre (7), une douille de guidage (6) s'adaptant à cet embout, et comportant un dispositif d'encliquetage (11, 12) servant à fixer exialement les deux éléments (1, 7) de la pièce à main à l'état accouplé, ainsi qu'un dispositif formant guide de lumière aboutissant à la partie de tête (9) de la pièce à main, caractérisé par le fait que les éléments (1, 7) de la pièce à main contiennent un guide de lumière incorporé (14, 16; 20, 21; 25, 26; 27, 28; 30, 31; 35–39; 42, 43; 50, 51; 54, 54a), l'élément (1) de la pièce à main contenant des organes (14, 16, 26, 36, 37, 38, 54) d'amenée de la lumière et l'autre élément (7) de la pièce à main contenant des éléments (21, 28, 35, 38, 43, 51) de retransmission de la lumière, qu'au moins l'un (1 ou 7) des deux éléments de la pièce à main comporte, sur des surfaces réciproquement voisines (13, 18) des organes de guidage (5, 6), un dispositif annulaire de transmission de la lumière (14, 25, 30, 39, 54 ou 20, 27, 31, 42, 50) relié optiquement aux organes (16, 26, 37, 38, 54) de guidage de la lumière de cet élément (1 ou 7) de la pièce à main et en vis-à-vis duquel se trouvent disposés, de façon correspondante, lorsque les éléments de la pièce à main sont à l'état accouplé, des moyens (20, 27, 31, 42, 50 ou 14, 25, 30, 39, 54) de prise en charge et de transfert de la lumière, reliés optiquement, au niveau de surfaces de l'autre élément (7 ou 1) de la pièce à main, aux organes (21, 28, 35, 43, 51 ou 16, 26, 36, 37, 38, 54) de guidage de la lumière de cet élément de la pièce à main.

2. Pièce à main suivant la revendication 1, caractérisée par le fait que le dispositif annulaire de transmission de la lumière (20, 27, 31, 42, 50) est monté sur l'élément (7) de la pièce à main, qui contient les organes (21, 28, 35, 43, 51) retransmettant la lumière.

3. Pièce à main suivant la revendication 1 ou 2, caractérisée par le fait que pour l'amenée de la lumière, il est prévu une ou plusieurs sources de lumière dont l'extrémité de sortie de la lumière est disposée de façon correspondante en vis-à-vis du dispositif de transmission de la lumière (20) et qui sont réalisés sous la forme de lampes à incandescence (15) ou de guides de lumière (16, 26, 36, 37, 38, 54) et, dans le cas où il en est prévu plusieurs, sont disposés en étant décalés réciproquement sur le pourtour de l'élément (1) de la pièce à main.

4. Pièce à main selon la revendication 1, caractérisée en ce qu'un dispositif de transmission de la lumière (14, 20; 25, 27; 39, 42; 50, 54) est monté sur les deux éléments (1, 7) de la pièce à main.

5. Pièce à main suivant l'une des revendications 1 à 4, caractérisée par le fait que le dispositif de transmission de la lumière (14, 20, 30, 31) est monté sur une surface frontale (13, 18, 23, 24) de l'élément (1, 7) de la pièce à main.

6. Pièce à main suivant l'une des revendications 1 à 4, caractérisée par le fait que le dispositif de transmission de la lumière (25, 27, 49, 50) est disposé sur une surface périphérique de l'élément (1, 7) de la pièce à main comportant une surface radiale de sortie ou d'entrée de la lumière.

7. Pièce à main suivant la revendication 5, caractérisée par le fait que dans le cas où les éléments (1, 7) de la pièce à main possèdent des diamètres extérieurs ($d_1$, $d_2$) différents et dans le cas où un organe de jonction (17), réalisé de préférence avec une forme conique, est monté sur un élément (7) de la pièce à main de manière à réaliser une adaptation aux contours extérieurs des éléments de la pièce à main, le dispositif de transmission de la lumière (20) est disposé dans cet organe de jonction (17).

8. Pièce à main suivant la revendication 5, caractérisée par le fait que dans le cas d'un moteur d'entraînement, de préférence un moteur électrique (2), comportant un embout de guidage (5) raccordé par bride au carter (22) du moteur et entourant l'arbre d'entraînement, un anneau (14) de transmission de la lumière est monté dans la bride (29) et qu'une source de lumière (15), de préférence une lampe à incandescence, qui alimente l'anneau (14) de transformation de la lumière, est monté dans le carter (22) du moteur.

9. Pièce à main suivant la revendication 8, caractérisée par le fait que la source de lumière (15) est montée à l'extérieur de l'anneau (14) de transformation de la lumière dans le carter (22) du moteur et éclaire frontalement l'anneau (14) de transmission de la lumière.

10. Pièce à main suivant la revendication 5 ou 6, caractérisée par le fait que dans le cas d'un moteur électrique d'entraînement incluant un moteur d'entraînement à aimants permanents (1), une source de lumière (15) est montée sur la bride de raccordement (34) du moteur d'entraînement (1) et l'extrémité (36, 36a) d'un corps de transmission de la lumière (37, 37a) disposé entre les coques (40, 40a) des aimants et réalisé en forme d'anneau circulaire en coupe transversale, est placée au centre optique de la source de lumière (1).

11. Pièce à main suivant la revendication 10, caractérisée par le fait que le corps (37, 37a) de transmission de la lumière est constitué par deux demi-coques disposées sur la périphérie et dont des extrémités frontales (36, 36a) sont réunies au centre optique de la source de lumière (15).

12. Pièce à main suivant la revendication 5 ou 6, caractérisée par le fait que dans le cas d'un moteur d'entraînement, de préférence un moteur électrique d'entraînement (1), comportant un embout de guidage (5) raccordé par bride sur le carter du moteur et entourant l'arbre d'entraînement (4) de ce dernier, il est prévu un corps formant guide de lumière (54, 54a), réalisé en forme de douille, monté sur le carter du moteur ou bien constituant la surface enveloppe de ce dernier.

13. Pièce à main suivant la revendication 6, caractérisée par le fait que dans le cas d'un élément (7) de la pièce à main, qui comporte un carter de tête (9) servant à recevoir un outil rotatif (10) ainsi que des éléments d'arbres d'entraînement (8) montés intérieurement et qui peuvent être amenés en prise au moyen d'un dispositif d'entraînement (32) avec un organe antagoniste (33) monté sur l'autre élément de la pièce à main, il est prévu un anneau (27, 31, 42, 50) de transmission de la lumière, qui est monté à l'intérieur de la douille de guidage (6) et qui est relié à un guide de lumière (28, 35, 51, 43) aboutissant au carter de tête (9).

14. Pièce à main suivant la revendication 13, caractérisée par le fait que le guide de lumière (43) aboutissant au carter de tête (9) entoure le carter de tête (9) sur la face frontale tournée vers l'outil (10).

15. Pièce à main suivant la revendication 14, caractérisée par le fait que le guide de lumière (43) forme, au niveau de la face frontale du carter de tête (9), un capot de fermeture (44), constitué en un matériau guidant la lumière, d'un canal annulaire de pulvérisation (45) qui comporte un ou plusieurs canaux de sortie de pulvérisation (46) disposés sur la périphérie, ou bien est relié optiquement à un tel capot de fermeture.

16. Pièce à main suivant l'une des revendications 13 à 15, caractérisée par le fait que le guide de lumière (51) qui aboutit au carter de tête (9) possède une forme tubulaire et que son canal creux est utilisé pour guider un liquide de refroidissement (eau, liquide de pulvérisation).

17. Pièce à main suivant l'une des revendications 13 à 16, caractérisée par le fait que l'élément (7) de la pièce à main muni du carter de tête (9) ou des parties de ces éléments (47 à 49) sont réalisés de mainière à guider la lumière.

18. Pièce à main notamment suivant la revendication 17, caractérisée par le fait que les corps (47 et 49) qui logent les paliers des arbres d'entraînement, de l'élément (7) de la pièce à main, y compris le carter de tête (9), sont réalisés en un matériau formant guide de lumière et que la face frontale, tournée par l'outil (10), du carter de tête, est réalisée sous la forme d'une surface de sortie de la lumière (44).

19. Pièce à main suivant l'une des revendications 1 à 18, caractérisée par le fait que le dispositif de transmission de lumière (14, 20, 25, 27, 30, 31, 39, 42, 50) est constitué par une multiplicité de fibres conductrices de lumière individuelles (57), dont les extrémités (57a) sont disposées en étant réparties uniformément sur le pourtour d'un cercle ou sur une surface annulaire d'un support (55).

20. Pièce à main suivant la revendication 19, caractérisée par le fait que les extrémités (57a) des fibres conductrices de lumière sont réunies en un anneau (55) qui contient à cet effet un évidement annulaire (56) et des évidements (59) disposés sur le pourtour d'un cercle (d) et correspondant respectivement au diamètre d'une fibre conductrice de lumière (57) individuelle, pour la fixation des extrémités (57a) des fibres conductrices de lumière, et que la cavité (6), qui est formée dans le cas de fibres conductrices de lumière décalées, dans l'évidement annulaire (56) est remplie par un matériau de remplissage.

21. Pièce à main suivant la revendication 20, caractérisée par le fait qu'au moins deux anneaux montés concentriquement l'une par rapport à l'autre (diamètre d, d') sont disposés avec les fibres conductrices de lumière (57) dans le support (55).

22. Pièce à main suivant l'une des revendications 1 à 18, caractérisée par le fait que le dispositif de transmission de lumière (14, 20, 30, 31) est constitué par un support annulaire (61) comportant une miltiplicité de corps formant guides de lumière (62) montés en son intérieur et qui possèdent, sur l'extrémité frontale tournée vers l'élément de la pièce à main correspondant à ce support, une section transversale individuelle (63) occupant dans sa totalité la section transversale circulaire (64) du support (61), et qui sont constitués avec une forme se rétrécissant en direction de l'autre extrémité, tout en conservant leurs surfaces en coupe transversale et forment un élément de surface rectangulaire (65), auquel se raccorde un prisme collecteur (67) qui est relié à un guide de lumière (68) monté dans l'élément (1, 7) de la pièce à main.

23. Pièce à main selon la revendication 22, caractérisée par le fait que les différents guides de lumière (62) et le prisme collecteur (67) sont constitués en verre optique.

24. Pièce à main suivant l'une des revendications 1 à 18, caractérisée par le fait que le dispositif de transmission de lumière (14, 20, 30, 31) est constitué par une multiplicité de fibres conductrices de lumière (70) individuelles, les extrémités (70a) sont disposées en étant réparties uniformément sur un support annulaire (72), et qu'il est prévue, sur le support (72), des lentilles convergentes (74) alignées sur les extrémités frontales (70a) des fibres conductrices de lumière (70) et qui forment la surface de transmission de la lumière et concentrent la lumière incidente ou la lumière sortante dans les extrémités (70a) des fibres conductrices de lumière, qui sont disposées au foyer.

25. Pièce à main suivant la revendication 24, caractérisée par le fait que les lentilles (74) sont noyées dans un matériau de support optique par exemple du Plexiglas.

26. Pièce à main suivant l'une des revendications 1 à 18, caractérisée par le fait que le dispositif de transmission de lumière (14, 20, 30, 31) est constitué par un corps en verre (76) qui reçoit ou délivre la lumière par l'intermédiaire d'une surface inerte (77), que le corps en verre (76) est réalisé sous la forme d'un prisme de renvoi qui est relié optiquement à un prisme collecteur (78) relié à la section des guides de lumière retransmettant la lumière.

27. Pièce à main suivant la revendication 28, caractérisée par le fait que le prisme de renvoi (76) est constitué par un corps qui forme, selon un développement à plat, un triangle rectangle (A, B, C), dont les surfaces situées le long des côtés (A, B; B, C) de l'angle droit forment l'entrée et la sortie de la lumière et dont les surfaces le long de l'hypoténuse (A, C) réfléchissent les faisceaux de lumière, et que la surface, qui correspond à un côté (B, C) de l'angle droit est reliée optiquement à un prisme (78) réalisé en forme de coin et à l'extrémité frontale élargie (79) duquel se raccorde un guide de lumière retransmettant la lumière.

28. Pièce à main suivant l'une des revendications 4 à 18, caractérisée par le fait que le dispositif de transmission de lumière (14, 20; 25, 27, 30, 31, 39, 42, 50) est une moitié (80a ou 80b) d'un canal annulaire en forme de tube (80) métallisé intérieurement ou poli et dans lequel débouche la partie d'extrémité (86) d'un guide de lumière, et que la pièce d'extrémité (82, 87) du guide de lumière (83, 88) retransmettant la lumière, au niveau de laquelle la lumière est prélevée hors du corps annulaire (80) par l'intermédiaire d'une surface oblique (84, 90), débouche dans l'autre seconde moitié (80b), qui appartient au canal annulaire et qui est disposée dans l'autre élément (7) de la pièce à main.

29. Pièce à main suivant la revendication 28, caractérisée par le fait que l'extrémité (81) du guide de lumière débouche dans une moitié (80a) de l'espace annulaire en forme de tube (80) en faisant un angle compris entre 45 et 60° et que l'extrémité (82) du guide de lumière est disposée en étant parallèle à l'axe dans la seconde moitié (80b) et contient un prisme de renvoi (84) recevant la lumière délivrée par l'espace annulaire en forme de tube (80) et la retransmettant suivant une direction parallèle à l'axe.

30. Pièce à main suivant la revendication 28, caractérisée par le fait que les deux extrémités (87, 85) du guide de lumière, qui débouchent dans l'espace annulaire en forme de tube (80), comportent un prisme de renvoi ou bien forment un tel prisme et que les surfaces (89, 90) constituant le prisme de renvoi sont décalées optiquement l'une par rapport à l'autre.

FIG 1

FIG 2

0 075 096

FIG 3

FIG 4

0 075 096

FIG 5

FIG 6

FIG 7

0 075 096

FIG 8

FIG 9

FIG 10

FIG 11

FIG 12

FIG 13

FIG 14

0 075 096

FIG 15

FIG 16

FIG 17

FIG 18

23

FIG 19

FIG 20

FIG 21

FIG 22